# EUROPÄISCHE PATENTANMELDUNG

(11) **EP 2 031 272 A2**
(43) Veröffentlichungstag der Anmeldung: **04.03.2009**
(21) Anmeldenummer: 08013534.6
(22) Anmeldetag: 28.07.2008
(51) Int. Cl.: F16F 15/134

(54) **Drehschwingungsdämpfer**

(30) Priorität: 27.08.2007 DE 102007040412
(71) Anmelder: LuK Lamellen und Kupplungsbau Beteiligungs KG, 77815 Bühl (DE)
(72) Erfinder: Schumann, Lars, 77815 Bühl (DE); Bosse, Michael, 76547 Sinzheim (DE)

(57) **Zusammenfassung**

Die Erfindung betrifft einen Drehschwingungsdämpfer (1) mit zwei um eine Drehachse drehbaren und gegeneinander entgegen der Wirkung eines Energiespeichers (2) in Umfangsrichtung verdrehbaren Bauteilen (3,4), wobei ein Bauteil eine Gleitschale (8) aufweist, an der sich der Energiespeicher gegen Fliehkrafteinwirkung abstützt, wobei die Gleitschale (8) gegenüber dem Bauteil verdrehbar, beispielsweise mittels eines Gleit- oder Wälzlagers, aufgenommen ist.

## Beschreibung

Die Erfindung betrifft einen Drehschwingungsdämpfer mit zwei um eine Drehachse drehbaren und entgegen der Wirkung zumindest eines Energiespeichers in Umfangsrichtung relativ zueinander verdrehbaren Bauteilen, wobei ein Bauteil mittels eines axialen Ansatzes den zumindest einen Energiespeicher gegen Fliehkraft abstützt und eine Gleitschale radial zwischen dem zumindest einen Energiespeicher dem axialen Ansatz angeordnet ist.

Drehschwingungsdämpfer dieser Gattung sind zum Beispiel aus der DE 103 10 831 A1 bekannt. In dem dort als Zweimassenschwungrad ausgebildeten Drehschwingungsdämpfer sind eine oder mehrere über den Umfang verteilte Gleitschalen fest in den ihnen zugeordneten Bauteilen angeordnet, an denen sich Energiespeicher radial unter Fliehkraft abstützen.

Für die vorliegende Erfindung ergibt sich daher die Aufgabe, den Stand der Technik in vorteilhafter Weise weiter zu bilden. Insbesondere sollen die Reibungsverhältnisse und Hysterese der Energiespeicheranordnung verbessert werden.

Die Aufgabe wird durch einen Drehschwingungsdämpfer mit zwei um eine Drehachse drehbaren und entgegen der Wirkung zumindest eines Energiespeichers in Umfangsrichtung relativ zueinander verdrehbaren Bauteilen, wobei ein Bauteil mittels eines axialen Ansatzes den zumindest einen Energiespeicher gegen Fliehkraft abstützt und eine Gleitschale radial zwischen dem zumindest einen Energiespeicher und dem axialen Ansatz angeordnet ist, gelöst, wobei die Gleitschale gegenüber dem axialen Ansatz in Umfangsrichtung verdrehbar angeordnet ist.

Ein Drehschwingungsdämpfer im Sinne der Erfindung kann ein Dämpfer zur Dämpfung von Torsionsschwingungen sein, die beispielsweise von Brennkraftmaschinen hervorgerufen werden. Die beschriebenen Drehschwingungsdämpfer eignen sich daher insbesondere für Kraftfahrzeuge mit Verbrennungsmotoren und werden an einem Eingangs- oder Primärteil des Drehschwingungsdämpfers mit der Kurbelwelle der Brennkraftmaschine und an einem Ausgangsteil mit dem Getriebe verbunden. Auf dem Ausgangs- oder Sekundärteil kann eine Reibungskupplung vorgesehen sein, deren Kupplungsscheibe mit einer Getriebeeingangswelle verbunden sein kann. Alternativ kann die Sekundärseite oder das Sekundärteil mit einem Drehmomentwandler verbunden sein. Werden dem Primär- und Sekundärteil Massen mit einem vorgegebenen Trägheitsmoment zugeordnet, erfüllt der Drehschwingungsdämpfer die Funktion eines Zweimassenschwungrades.

Zur Dämpfung der Drehschwingungen sind die beiden als Ein- und Ausgangsteile, beziehungsweise als Primär- und Sekundärteile entgegen der Wirkung des zumindest einen Energiespeichers verdrehbar, wobei parallel oder seriell zu dem zumindest einen Energiespeicher über den vollen oder einen Teilweg der Verdrehung mit oder ohne Verschleppung zumindest eine Reibeinrichtung geschaltet werden kann. Der zumindest eine Energiespeicher kann aus mehreren über den Umfang verteilten Federelementen, die auf Druck und/oder auf Zug belastbar sein können, bestehen. Dabei können mehrere Federgruppen auf einem oder mehreren Durchmessern angeordnet sein. Besonders vorteilhaft ist die Verwendung von sogenannten Bogenfedern, die auf den Einsatzdurchmesser vorgebogen sein können und daher leichter zu montieren sind. Die Energiespeicher werden bei Verdrehung der beiden Bauteile jeweils von einer Anschlagfläche des einen und einer Anschlagfläche des anderen Bauteils beaufschlagt, das heißt, bei Druckfedern komprimiert und bei Zugfedern gezogen, wobei in diesem Falle die Federn in den Anschlagflächen eingehängt werden.

Bei einer Verdrehung des Drehschwingungsdämpfers um die Drehachse entstehen an den Energiespeichern Fliehkräfte, durch die die Energiespeicher nach außen beschleunigt und mit einer entsprechenden Kraft gegen den Außenumfang gedrückt werden. Bei gleichzeitiger Verdrehung der Bauteile gegeneinander entsteht eine erhöhte Reibung der Kontaktflächen der Energiespeicher und den diesen radial abstützenden Teilen. Entsprechend ist zumindest eine Gleitschale vorgesehen, an den sich der zumindest eine Energiespeicher abstützen kann. Wegen der hohen Reibung ist insbesondere bei Lastwechseln eine hohe Hysterese zu beobachten, die dadurch behoben wird, dass die zumindest eine Gleitschale in dem sie aufnehmenden Bauteil in Umfangsrichtung verdrehbar aufgenommen werden kann. Auf diese Weise wird die Hysterese vermindert, indem nicht die Reibung des Energiespeichers selbst gegenüber der Gleitschale vermindert wird. Vielmehr verdreht sich die Gleitschale mitsamt dem sich auf diesem reibungsbehaftet abstützenden Energiespeicher. Dabei kann die Gleitschale aus mehreren, sich über den Umfang verteilenden Ringsegmenten gebildet sein. Auf diese Weise entsteht quasi für jeden Energiespeicher ein Segment einer Gleitschale, auf der sich dieser abstützt. Bei mehreren über den Umfang verteilten Energiespeichern können die einzelnen Gleitschalen direkt aneinander in Umfangsrichtung ohne Spiel angeordnet sein. Auch können die Gleitschalen mit Spiel in Umfangsrichtung versehen sein, so dass sich die Gleitschalen unabhängig voneinander und ohne gegenseitig anzustoßen in Umfangsrichtung verlagern können. Als besonders vorteilhaft hat sich ergeben, wenn die Gleitschale als in sich geschlossenes Ringteil ausgebildet ist. Eine derartig gebildete Gleitschale kann aus Flachmaterial gezogen oder gestanzt und zur Ringform gebogen werden. Das Ringteil kann geschlossen, beispielsweise verschweißt sein oder bei elastischer Ausführung offen bleiben und somit in radiale Richtung durch Aufweitung des Durchmessers ausgleichend sein. Das Ringteil kann an seiner Außen- und/oder Innenseite den entsprechenden Konturen der Abstützflächen des Bauteils beziehungsweise der Energiespeicher angepasst sein. Im Weiteren wird der Begriff Gleitschale auch unter Einschluss derartiger Ringteile verwendet.

Die Gleitschale ist an einem axialen Ansatz eines Bauteils, das das Primär- oder Sekundärteil sein kann, aufgenommen. Dieser axiale Ansatz kann beispielsweise mittels Metallumformungsverfahren, beispielsweise Tiefziehen, Fließpressen oder ähnlicher Verfahren, aus dem Bauteil gebildet oder als separates Teil, beispielsweise als Ringteil, angebracht sein. In vorteilhafter Weise kann das Bauteil so geformt sein, dass der axiale Ansatz Teil eines Aufnahmekäfigs für die Aufnahme der Energiespeicher ist, wobei an den axialen Ansatz ein weiteres Teil zur Begrenzung des Aufnahmekäfigs auf der gegenüberliegenden Seite vorgesehen sein kann.

Die verdrehbare Lagerung der Gleitschale gegenüber dem axialen Ansatz erfolgt in vorteilhafter Weise reibungsoptimiert mittels einer entsprechenden Lagerung von Gleitschale und Aufnahmefläche aufeinander. In vorteilhafter Weise kann die Gleitschale gegenüber dem axialen Ansatz gleitgelagert sein. Zur Ausbildung eines Gleitlagers ist die im axialen Ansatz vorgesehene Anlagefläche für die Gleitschale und die Gleitschale selbst zur Ausbildung einer geringen Reibung für den Gleitlagereinsatz vorbereitet. Zum einen kann zwischen den beiden Teilen ein Gleitmittel, beispielsweise Öl, Fett oder eine Gleitpaste, wirksam sein. Dem Gleitmittel können feste Zusätze wie Graphit, Molybdänsulfid, Teflonpartikel oder andere eine dauerhafte Reibminderung bewirkende Stoffe beigemengt sein. Auch können diese Stoffe zur Ausbildung einer Trockenreibung ohne flüssige Schmierstoffe verwendet werden. Zum anderen kann die Anlagefläche des axialen Ansatzes und/oder die ihr zugewandte Oberfläche der Gleitschale mit Material beschichtet sein, die Gleiteigenschaften aufweisen, beispielsweise können zur Ausbildung eines Gleitlagers gemäß dem bekannten Permaglide®-Prinzip entsprechende Beschichtungen vorgesehen werden. Es versteht sich, dass zur Verbesserung der Reibeigenschaften für die Kontaktflächen Gleitschiene/Energiespeicher entsprechende Vorkehrungen getroffen werden können, beispielsweise kann die Gleitschale auf beiden Oberflächen beschichtet sein. In gleicher Weise kann die Anlagefläche des axialen Ansatzes beschichtet werden. Im Falle einer Befettung der Gleitschale kann es besonders vorteilhaft sein, die Oberfläche der Gleitschale zu strukturieren, um beispielsweise Taschen für die Bevorratung von Fett vorzuhalten. Eine Strukturierung kann auch sehr kleine Kavitäten vorsehen, die beispielsweise durch Schleifen oder anderen Oberflächenbearbeitungsverfahren resultieren und in der Regel eine sehr geringe Rauhtiefe mit einer mittleren Rauhtiefe bis zu 10 - 100µm aufweisen. Diese Kavitäten eigenen sich in der Regel ebenfalls als Fettdepots, insbesondere wenn als Material für die Gleitschalen Kunststoff verwendet wird und die Gleitschalen mittels Spritzgussverfahren hergestellt werden. In diesem Falle kann eine besonders reproduzierbare Oberfläche durch Erodieren des für die Teile verwendeten Spritzgusswerkzeuges erzielt werden.

Alternativ zu einer Gleitlagerung kann zwischen der Gleitschale und einer Anlagefläche eines axialen Ansatzes eines der beiden gegeneinander verdrehbaren Bauteile eine Wälzlagerung vorgesehen werden. Hierzu kann ein komplettes Wälzlager entsprechender Bauform radial zwischen der Gleitschale und dem axialen Ansatz eingebracht und die Gleitschale oder Gleitschalen auf diesem aufgenommen werden. Von großem Vorteil ist jedoch, wenn die Gleitlagerung zumindest zum Teil aus Komponenten gebildet wird, die bereits eine zur Bildung eines Wälzlagers geeignete Form aufweisen. So können beispielsweise die Gleitschiene bei ringförmiger Ausgestaltung und/oder die ringförmige Aufnahmefläche am axialen Ansatz die Aufnahmeprofile für die Wälzkörper aufweisen, so dass dadurch Innen- und/oder Außenring für die Wälzlagerung bereits durch diese Teile gebildet werden. Die Wälzkörper werden danach während der Montage des Drehschwingungsdämpfers entweder mittels eines Wälzkörperkäfigs oder ohne einen solchen eingebracht. Dabei können die Wälzkörper kugel-, nadel- oder tonnenförmig sein, auch neuartige Formen der Wälzkörper sind von der Erfindung umfasst. In vorteilhafter Weise werden Wälzkörper verwendet, deren radiale Ausdehnung im Verhältnis zu ihrer Traglast optimiert ist, um den Drehschwingungsdämpfer bezüglich seinen radialen Ausmaßen bei vorteilhaft großem Durchmesser, auf dem die Energiespeicher angeordnet sind, gering zu halten oder bei vorgegebenem Durchmesser große Energiespeicherkapazitäten unterbringen zu können.

In vorteilhafter Weise kann der axiale Ansatz so ausgestaltet sein, dass eine Ringnut zur Aufnahme des Wälzlagers eingebracht ist. Beispielsweise kann die Ringnut einen Außenring eines Wälzlagers in der Weise aufnehmen, dass eine seitliche Wand der Ringnut mittels des axialen Ansatzes und die gegenüberliegende Wand mittels eines zusätzlichen, mit dem axialen Ansatz verbundenen Ringteils gebildet werden. In vorteilhafter Weise kann ein Bauteil der beiden gegeneinander verdrehbaren Bauteile, ein an diesem angeformter axialer Ansatz sowie ein seitlich an den axialen Ansatz angebrachtes Ringteil unter Bildung eines Torus so geformt werden, dass innerhalb des Torus die Energiespeicher und die Gleitschale untergebracht werden. Zudem kann an einer inneren Anlagefläche am Außenumfang eine Ringnut vorgesehen sein, die bei der Herstellung der Teile mittels Metallumformungsverfahren bereits werkzeugfallend entsteht oder nachträglich, beispielsweise mittels spanabhebender Verfahren eingearbeitet wird.

Die Gleitschale kann zur Verminderung des Verschleißes gehärtet sein. Dabei wird der Härtegrad in Abstimmung auf die mit der Gleitschiene in Reibkontakt stehenden Teile eingestellt. So kann es sich als vorteilhaft erweisen, die Gleitschiene in Abstimmung auf den Härtegrad der Energiespeicher zu härten, wobei berücksichtigt wird, dass bei einem Gleitkontakt mit der Anlagefläche zum Primär- oder Sekundärteil, die nicht gehärtet sein müssen, an diesem beispielsweise durch Teilhärten oder Beschichten ein Ausgleich stattfindet. Weiterhin kann vorgesehen sein, dass die Gleitschiene elastisch in radiale Richtung ausgestaltet ist. Beispielsweise kann eine entsprechend dünn und aus Federstahl gestaltete Gleitschiene mit Spiel zur radial äußeren Anlagefläche ausgestaltet sein, so dass sie punktuellen Belastungen durch den oder die Energiespeicher ausweichen kann. Auch kann die Verwendung von Gleitschienen aus Kunststoff vorteilhaft sein, die entsprechend verstärkt sein können, beispielsweise mit Glasfaser- oder Kohlenstoffanteilen im Bereich von 30 - 70 % oder dergleichen, und die in radiale Richtung elastisch nachgeben, zur Energiespeicherseite hin jedoch armiert sein können. Beispielsweise kann ein Ring aus Blech als Kern für eine ringförmige Gleitschale dienen, der mit Kunststoff umspritzt ist. Auf diese Weise können harte aber elastische Gleitschalen bereitgestellt werden.
Die Erfindung wird anhand der Figuren 1 bis 5 näher erläutert. Dabei zeigen:
- Figur 1: eine schematische Anordnung eines Ausführungsbeispiels eines Drehschwingungsdämpfers in Ansicht,
- Figur 2: ein als Zweimassenschwungrad ausgestaltetes Ausführungsbeispiel eines Drehschwingungsdämpfers in angeschnittener Ansicht,
- Figur 3: eine Ansicht einer ringförmigen Gleitschale mit Energiespeichern,
- Figur 4: ein Detail der Figur 2 einer Gleitschalenanordnung und

- Figur 5: einen Ausschnitt aus einem Ausführungsbeispiel eines verwendeten Wälzlagers.

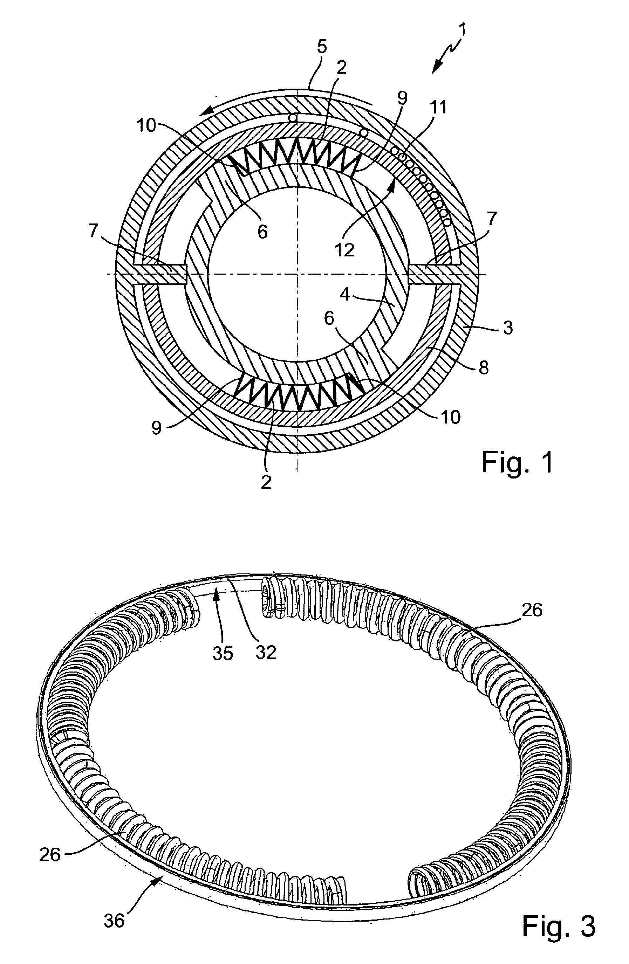

Figur 1 zeigt ein schematisch dargestelltes Ausführungsbeispiel eines Drehschwingungsdämpfers 1 mit zwei entgegen der Wirkung der Energiespeicher 2 verdrehbaren Bauteile 3, 4 im Schnitt. Der Drehschwingungsdämpfer 1 wird von einer nicht dargestellten Antriebseinheit wie Verbrennungsmotor oder Brennkraftmaschine in Drehrichtung des Pfeils 5 angetrieben. Dabei kann die Verbindung mit der Antriebseinheit an einem der beiden Bauteile 3, 4 erfolgen, wobei das jeweils andere Bauteil 4, 3 mit der Ausgangsseite, beispielsweise einer Getriebeeingangswelle, verbunden ist. Im Drehmomentpfad dazwischen kann eine Trennkupplung, beispielsweise eine Reibungskupplung, Flüssigkeitskupplung oder hydrodynamischer Drehmomentwandler mit oder ohne Wandlerüberbrückungskupplung angeordnet sein. Bei auftretenden Drehschwingungen (Torsionsschwingungen) infolge einer in Drehrichtung der Kurbelwelle der Antriebseinheit ungleichmäßigen Kraftentfaltung wird das mit der Kurbelwelle der Antriebseinheit verbundene Bauteil 3, 4 entgegen dem anderen Bauteil 3, 4 beschleunigt oder verzögert, wodurch die Energiespeicher 2 in beide Drehrichtungen von Anschlagflächen 6, 7 der beiden Bauteile 3, 4 beaufschlagt werden, wobei die Energiespeicher 2 Energie aufnehmen und bei sich abgebauten Drehmomentspitzen Energie auf die Bauteile 3, 4 übertragen, wodurch eine Glättung des Drehmomentverlaufs des über den Drehschwingungsdämpfer 1 geleiteten Drehmoments erfolgt. Den Energiespeichern 2 kann abhängig vom Verdrehwinkel, von der auftretenden Fliehkraft und dergleichen eine mittels mindestens einer hierzu vorgesehenen Reibeinrichtung eine Hysterese zur verbreiterten Aufnahme und/oder Abgabe der von Energiespeichern gewandelten Energie aufgeschaltet werden. Infolge der auf die Energiespeicher 2, insbesondere bei Verwendung von in der Regel aus gehärtetem Federstahl bestehenden Bogenfedern mit langem Erstreckungswinkel und hohen Drehzahlen der Kurbelwelle, wirkenden Fliehkräfte ist durch die während der Dämpfungsvorgänge auftretenden Relativbewegungen der Energiespeicher 2 zu den Bauteilen 3, 4 die radial äußere Berührungsfläche des Bauteils 3 besonderem Verschleiß ausgesetzt. Es wird daher eine in diesem Ausführungsbeispiel ringförmig ausgeführte Gleitschale 8, die ebenfalls gehärtet sein kann, radial zwischen die Energiespeicher 2 und der Innenfläche des Bauteils 3 eingebracht. Außerdem können die Energiespeicher 2 durch hohe Fliehkräfte - wie dargestellt - in zumindest teilweise komprimiertem Zustand zurückgehalten werden, so dass zwischen den Endflächen 9 und den Anschlagflächen 7, oder auch - nicht dargestellt den Anschlagflächen 10 - Freiwinkel entstehen, die bei einer Lastumkehr zu einem harten Anschlag der Anschlagflächen 7 an den Endflächen 9 der Energiespeicher 2 führen kann. Um diesen harten Anschlag zu vermindern ist die Gleitschale 8 gegenüber dem Bauteil 3 verdrehbar beispielsweise mittels einer Gleit- oder Wälzlagerung gelagert, im gezeigten Ausführungsbeispiel deuten die zwischen dem Bauteil 3 und der Gleitschale 8 gezeigten Wälzkörper 11 in Form von Nadeln oder Kugeln ein Wälzlager 12 an, bei dem direkt das Bauteil 3 den Lageraußenring und die Gleitschale 8 den Lagerinnenring bilden.

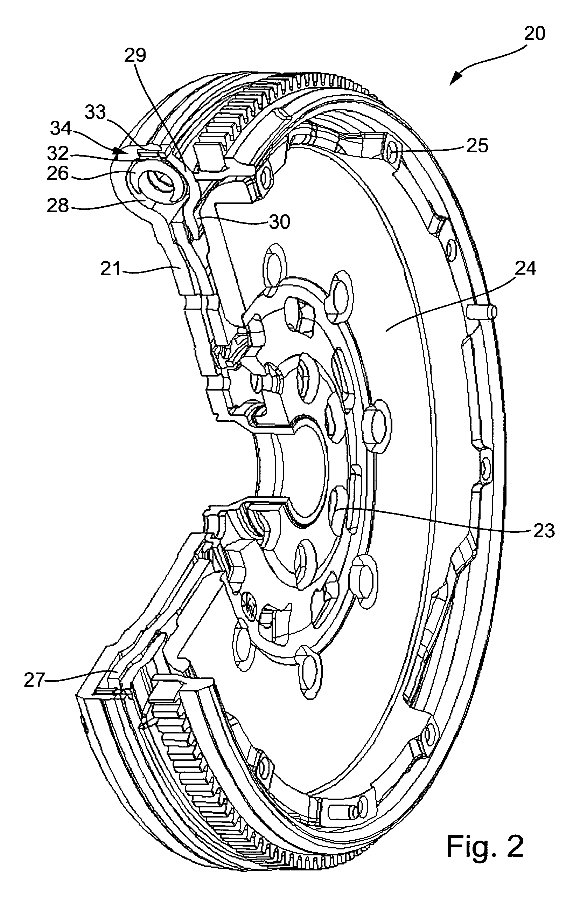

Figur 2 zeigt ein Ausführungsbeispiel eines Drehschwingungsdämpfers in Form eines Zweimassenschwungrades 20 in Ansicht mit einem Teilausschnitt zur Verdeutlichung des Innenaufbaus. Die beiden gegeneinander verdrehbaren Bauteile sind durch ein Primärteil 21 und ein Sekundärteil 22 gebildet, wobei das Primärteil 21 mit der vorgegebenen Primärmasse mittels durch die Öffnungen 23 geführter Schrauben mit der Kurbelwelle verbunden ist und das Sekundärteil 22 mit der Sekundärmasse eine Aufnahme für eine Reibungskupplung bildet, wobei es bereits mittels der auf der Sekundärmasse vorgesehenen Reibfläche 24 und den Aufnahmen 25 für ein Kupplungsgehäuse mit Anpressplatte eine Druckplatte bildet.

Die vorgebogenen Bogenfedern 26 werden primärseitig von - nicht dargestellten - im Primärteil eingeprägten Einzügen und von radial nach außen erweiterten Flanschen 27 eines mit dem Sekundärteil 22 fest verbundenen, beispielsweise vernieteten Flanschteils 31 beaufschlagt. Die vorzugsweise zwei, sich nahezu über den halben Umfang erstreckenden Bogenfedern 26 sind in einem torusähnlichen Ringraum 28 aufgenommen, der aus dem Primärteil 21 und einem ringförmigen Flanschteil 29 gebildet ist. Beide Teile Primärteil 21 und Flanschteil 29 können mittels Blechumformverfahren werkzeugfallend hergestellt sein und fest, beispielsweise verschweißt, vernietet, aufeinander geschrumpft oder in ähnlicher Weise miteinander verbunden sein. Soll der Ringraum 28 eine Öl- oder Fettfüllung zur Schmierung der sich im Ringraum 28 befindlichen, gegeneinander bewegenden Bauteile zumindest erhalten, ist eine dichte Verbindung von Primärteil 21 und Flanschteil 29 sowie eine dynamische Abdichtung 30 beispielsweise in Form einer Labyrinthdichtung, einer Dichtmembran von Vorteil.

Die Bogenfedern 26 sind radial außen durch eine Gleitschale 32 abgestützt, die einen Innenring für ein zwischen der Innenfläche des radial außen vorgesehenen axialen Ansatzes 33 des Primärteils 21 und den Bogenfedern 26 angeordneten Wälzlagers 34 bildet.

Zur Verdeutlichung ist in der Figur 3 die räumliche Anordnung der Bogenfedern 26 mit einem Abstand der primär- und sekundärseitigen Beaufschlagungsteile mit oder ohne Spiel in deren entspanntem Zustand radial innerhalb der ringförmigen Gleitschale 32 dargestellt. Die Innenfläche 35 als Anlagefläche für die Bogenfedern 26 kann im Querschnitt dem Radius der Bogenfedern 26 angeglichen sein. Die Oberfläche kann zur Aufnahme von Taschen zur Bevorratung von Schmiermittel entsprechend ausgestaltet sein. Die Größe der Taschen kann je nach Anwendungsart einen Bereich von einer makroskopischen Einprägung einzelner Taschen bis hin zur Einbringung mikroskopisch feiner Strukturen, beispielsweise im Bereich von Mikrometern durch Erodieren, umfassen. Der Außenfläche 36 kann für die Aufnahme von Wälzkörpern und deren Abwälzen vorbereitet sein oder in Abwandlung zu der in Figur 2 dargestellten Wälzlagerung für einen Gleitkontakt mit der Anlagefläche des axialen Ansatzes 33 des Primärteils 21. Hierzu kann die Außenfläche 36 beschichtet, befettet und bezüglich ihrer Oberfläche entsprechend strukturiert und vorbehandelt sein.

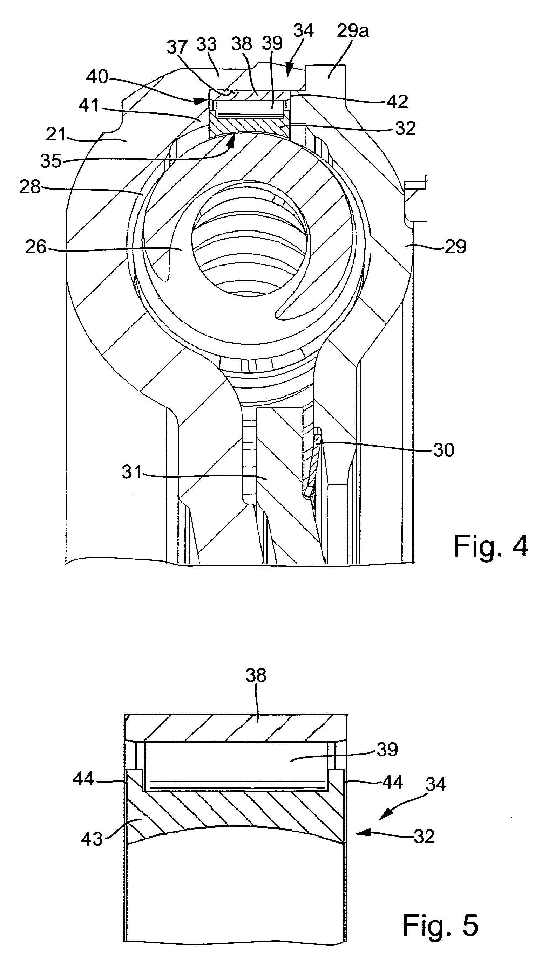

Figur 4 zeigt ein Detail der Figur 2 mit dem den torusförmigen Ringraum 28 bildenden Primärteil 21 mit axialem Ansatz 33 und dem mit diesem verschweißten Flanschteil 29, das einen axialen Anschlag 29a, der gleichzeitig Zündmarkierungen tragen kann, für den axialen Ansatz bildet, wobei an den Berührungsflächen eine Schweißnaht partiell zum befestigen der Teile aufeinander oder zur dichten Verbindung durchgehend angebracht werden kann. Eine andere Form der Abdichtung von Flanschteil 29 und Primärteil 21 können Dichtbänder, ein Dichtsitz oder Elastomerdichtungen sein. Die im Ringraum 28 enthaltenen Bogenfedern 26 werden von - nicht dargestellten - aus dem Flanschteil 31 auskragenden Flanschen 27 (Figur 2) beaufschlagt. Das zum Sekundärteil gehörende Flanschteil 29 ist mittels einer als Dichtmembran, die gleichzeitig Reibeigenschaften aufweisen kann, ausgestalteten Abdichtung 30 gegen das primärseitige Flanschteil 29 abgedichtet. Die Bogenfedern 26 stützen sich an der Innenfläche des axialen Ansatzes 33 des Primärteils 21 unter Fliehkrafteinwirkung mittels des Wälzlagers 34 verdrehbar ab. Dabei bildet die an den Querschnittsradius der Bogenfedern 26 angepasste Innenfläche 35 der ringförmigen Gleitschale 32 den Innenring des Wälzlagers 34. Der Außenring 38 ist durch ein separates Teil gebildet, kann aber auch in einem weiteren Ausführungsbeispiel von dem axialen Ansatz 33 mit der Innenfläche 37 als Wälzfläche für die Wälzkörper 39 gebildet werden, wodurch ein Bauteil eingespart werden kann. In diesem Fall kann der axiale Ansatz 33 zumindest im Bereich der Innenfläche 37 gehärtet sein. Das Wälzlager 34 ist in vorteilhafter Weise in eine an der Außenseite des Primärteils vorgesehene Ringnut 40 eingebettet, wobei diese im gezeigten Ausführungsbeispiel durch im Primärteil 21 und im Flanschteil 29 eingebrachte Wangen 41, 42 gebildet wird.

Figur 5 zeigt einen Teilquerschnitt des in den Figuren 2 und 4 dargestellten Wälzlagers 34 mit einem aus der Gleitschale 32 gebildeten Innenring 43 und dem Außenring 38 und den Wälzkörpern 39, die in dem gezeigten Ausführungsbeispiel als Nadeln ausgestaltet sind und eine seitliche Führung, beispielsweise durch im Innenring 43 vorgesehenen Ringbünde 44, aufweist. Es versteht sich, dass entsprechende Führungen auch im Außenring 38 vorgesehen sein können.

**Bezugszeichenliste**

| | | | |
|---|---|---|---|
| 1 | Drehschwingungsdämpfer | 27 | Flansch |
| 2 | Energiespeicher | 28 | Ringraum |
| 3 | Bauteil | 29 | Flanschteil |
| 4 | Bauteil | 29a | Anschlag |
| 5 | Pfeil | 30 | Abdichtung |
| 6 | Anschlagfläche | 31 | Flanschteil |
| 7 | Anschlagfläche | 32 | Gleitschale |
| 8 | Gleitschale | 33 | Axialer Ansatz |
| 9 | Endfläche | 34 | Wälzlager |
| 10 | Endfläche | 35 | Innenfläche |
| 11 | Wälzkörper | 36 | Außenfläche |
| 12 | Wälzlager | 37 | Innenfläche |
| 20 | Zweimassenschwungrad | 38 | Außenring |
| 21 | Primärteil | 39 | Wälzkörper |
| 22 | Sekundärteil | 40 | Ringnut |
| 23 | Öffnung | 41 | Wange |
| 24 | Reibfläche | 42 | Wange |
| 25 | Aufnahme | 43 | Innenring |
| 26 | Bogenfeder | | |

## Patentansprüche

1. Drehschwingungsdämpfer (1) mit zwei um eine Drehachse drehbaren und entgegen der Wirkung zumindest eines Energiespeichers (2) in Umfangsrichtung relativ zueinander verdrehbaren Bauteilen (3, 4), wobei ein Bauteil (3) mittels eines axialen Ansatzes den zumindest einen Energiespeicher (2) gegen Fliehkraft abstützt und eine Gleitschale (8) radial zwischen dem zumindest einen Energiespeicher (2) und dem axialen Ansatz angeordnet ist, **dadurch gekennzeichnet, dass** die Gleitschale (8) gegenüber dem axialen Ansatz in Umfangsrichtung verdrehbar angeordnet ist.

2. Drehschwingungsdämpfer (1) nach Anspruch 1, **dadurch gekennzeichnet, dass** die Gleitschale (8) ein in sich geschlossenes Ringteil ist.

3. Drehschwingungsdämpfer (1) nach einem der Ansprüche 1 oder 2, **dadurch gekennzeichnet, dass** die Gleitschale gegenüber dem axialen Ansatz gleitgelagert ist.

4. Drehschwingungsdämpfer (1) nach einem der Ansprüche 1 bis 3, **dadurch gekennzeichnet, dass** die Gleitschale zumindest einseitig beschichtet ist.

5. Drehschwingungsdämpfer (1) nach einem der Ansprüche 1 bis 4, **dadurch gekennzeichnet, dass** der axiale Ansatz im Bereich der Anlage der Gleitschale beschichtet ist.

6. Drehschwingungsdämpfer (1) nach einem der Ansprüche 1 oder 2, **dadurch gekennzeichnet, dass** die Gleitschale (8, 32) gegenüber dem axialen Ansatz (33) wälzgelagert ist.

7. Drehschwingungsdämpfer (1) nach Anspruch 6, **dadurch gekennzeichnet, dass** die Gleitschale (32) einen Innenring (43) eines radial zwischen dem axialen Ansatz (33) und dem zumindest einen Energiespeicher angeordneten Wälzlagers (34) bildet.

8. Drehschwingungsdämpfer (1) nach einem der Ansprüche 1 bis 7, **dadurch gekennzeichnet, dass** das Bauteil mit dem axialen Ansatz (33) ein Primärteil (21) und das zu diesem verdrehbar angeordnete Bauteil ein Sekundärteil (22) eines Zweimassenschwungrades (20) ist.

9. Drehschwingungsdämpfer (1) nach Anspruch 8, **dadurch gekennzeichnet, dass** in den axialen Ansatz (33) des Primärteils (21) eine Ringnut (40) zur Aufnahme des Wälzlagers (43) eingebracht ist.

10. Drehschwingungsdämpfer (1) nach Anspruch 9, **dadurch gekennzeichnet, dass** eine seitliche Wange (41) der Ringnut (40) mittels des axialen Ansatzes (33) und die gegenüberliegende Wange (42) mittels eines zusätzlichen, mit dem axialen Ansatz (33) verbundenen Flanschteils (29) gebildet wird.

11. Drehschwingungsdämpfer (1) nach einem der Ansprüche 1 bis 10, **dadurch gekennzeichnet, dass** der zumindest eine Energiespeicher zumindest eine Bogenfeder (26) ist.

12. Drehschwingungsdämpfer (1) nach einem der Ansprüche 1 bis 11, **dadurch gekennzeichnet, dass** die Gleitschale (8, 32) zumindest einseitig befettet ist.

13. Drehschwingungsdämpfer (1) nach einem der Ansprüche 1 bis 12, **dadurch gekennzeichnet, dass** die Gleitschale (8, 32) an zumindest einer Seite eine strukturierte Oberfläche aufweist.

14. Drehschwingungsdämpfer (1) nach einem der Ansprüche 1 bis 13, **dadurch gekennzeichnet, dass** die Gleitschale (8, 32) gehärtet ist.

15. Drehschwingungsdämpfer (1) nach einem der Ansprüche 1 bis 13, **dadurch gekennzeichnet, dass** die Gleitschale aus Kunststoff gebildet ist.

16. Drehschwingungsdämpfer (1) nach Anspruch 15, **dadurch gekennzeichnet, dass** die Gleitschale armiert ist.
